# EUROPEAN PATENT APPLICATION

(11) **EP 3 598 371 A1**
(43) Date of publication of application: **22.01.2020**
(21) Application number: 18184246.9
(22) Date of filing: 18.07.2018
(51) Int. Cl.: G06Q 30/02

(54) **DEVICE AND METHOD FOR PROCESSING A DIGITAL VIDEO**

(71) Applicant: Huawei Telekomünikasyon dis Ticaret Limited Sirketi, 34768 Ümraniye, Istanbul (TR)
(72) Inventor: KUTLUK, Sezer, 34768 Ümraniye, stanbul (TR); ESEOGLU, Mustafa Furkan, 34768 Ümraniye, stanbul (TR); CITAK, Erol, 34768 Ümraniye, stanbul (TR); CELIK, Ibrahim Omer, 34768 Ümraniye, stanbul (TR); DISANLI, Onur, 34768 Ümraniye, stanbul (TR); GEZICI, Gizem, 34768 Ümraniye, stanbul (TR)
(74) Representative: Roth, Sebastian

(57) **Abstract**

The present invention provides a device for processing a digital video, wherein the device comprises a video analyzing unit configured to segment multimedia data of an input digital video to audial data and a plurality of video segments, and determine a video content information for each video segment by analyzing the audial data and frames of the video segment; a determination unit configured to detect at least one surface in a video segment, and select an advertisement image from a database for the detected surface, based on a semantic similarity between meta-data of the advertisement image and the determined video content information of the corresponding video segment; and a processing unit configured to generate an output video, by embedding the selected advertisement image from the database on the detected surface.

## Description

### TECHNICAL FIELD

The present invention relates to the field of image data and video processing, i.e., a process of analyzing and processing multimedia data of digital videos. More specifically, the present invention relates to a device for generating an output video by embedding an advertisement image into an input digital video and a corresponding method, wherein the device comprises a video analyzing unit, a determination unit and a processing unit.

### BACKGROUND

Presently, the advertisement industry is a main source of income for both of the advertisers and the media companies. In recent years, there has been an increase in the number of uploaded video files to internet and produced TV media. For instance, there are more than 300 hours of video files uploaded to a video-sharing website in every minute; and since 2011 there is a 71% increase rate in the number of scripted original TV series. To increase their profit, media companies or video sharing websites significantly rely on advertisement revenues (ad-revenue) coming from these media.

Conventional devices and methods for incorporating advertisement images and/or advertisement videos into the input videos are based on presenting the advertisements content to viewers as, for example, overlay visuals, pop-up windows, or other videos (e.g., an advertisement video) which are shown within the input videos, etc. However, using the conventional devices and methods, the important content of the input video may be obstructed and/or the viewers may be forced to watch the whole advertisement video, which may be disturbing and annoying for them. In addition, the methods that are based on product placement, require manual editing of the input video, which is a time consuming and costly process.

As discussed, the common way that media companies monetize their video data is to use pop-up or banner-like advertisements. The alternative method is to smoothly embed related advertisement content into the input video. By placing the advertisement content (e.g., advertisement images, advertisement videos, etc.) into the appropriate location and time frame, advertisers can introduce their products without disturbing the viewers. However, regarding thousands of hours of video data, selection and placement of advertisement contents are difficult and time consuming processes, when these tasks are done manually. In this case, manual advertisement embedding is a tedious job and requires high amount of money and workforce. Therefore, it is a significant issue to automatically insert advertisements in a non-intrusive way for companies that are willing to monetize their video data.

Furthermore, the conventional devices for inserting advertisements in videos, are limited only to videos which are captured with cameras that are motionless. In other words, a potential location for inserting an advertisement may be identified, only if the camera is motionless.

In the prior art, the videos are only classified using a deep-learning based video content analysis and a multimodal video analysis is not available yet. There is no automatic selection of advertisements, but rather the advertisements are selected manually. Furthermore, the state of the art techniques have less focus on advertisement matching problem via extensive video content analysis, and they do not address a combination of advertisement location/time frame selection, similar advertisement selection and occlusion.

Although there exist techniques for processing digital videos, e.g., embedding manually an advertisement into a video etc., it is generally desirable to improve devices and methods for processing digital videos.

### SUMMARY

In view of the above-mentioned problems and disadvantages, the present invention aims to improve the conventional devices and methods for processing digital videos. The present invention has thereby the objective to provide a device for processing a digital video.

The objective of the present invention is achieved by the solution provided in the enclosed independent claims. Advantageous implementations of the present invention are further defined in the dependent claims.

A first aspect of the present invention provides a device for processing a digital video, wherein the device comprises a video analyzing unit configured to segment multimedia data of an input digital video to audial data and a plurality of video segments, and determine a video content information for each video segment by analyzing the audial data and frames of the video segment; a determination unit configured to detect at least one surface in a video segment, and select an advertisement image from a database for the detected surface, based on semantic similarity between meta-data of the advertisement image and the determined video content information of the corresponding video segment; and a processing unit configured to generate an output video, by embedding the selected advertisement image from the database on the detected surface.

The advertisement image selected from the database may be a still image or an image of a video. More than one advertisement image can be selected from the database for embedding into the detected surface, e.g. an advertisement video, thus, a multimodal analysis of the video is provided, and the advertisement image is selected based on the video content information. The content based advertisement selection will show advertisements to the viewers which are related to the content of the videos that they watch, therefore it is very likely that the viewers will be interested by the advertisements without being disturbed.

Furthermore, the advertisements are shown at the right place and time intervals without disturbing the viewers, e.g., by selecting advertisements which are semantically related to the video content information, and embedding them in the video seamlessly. The invention has also the advantage that the viewers do not have to wait for advertisement breaks. Moreover, the viewers do not see irrelevant advertisements, since the advertisement images are selected based on the video content information, etc. Advertisements will be embedded naturally in the video, as if they were already there when the video was recorded. In addition, the best advertisement location (i.e. the detected surface) and time frame can be chosen automatically which avoids disturbing the viewers.

In an implementation from the first aspect, the output video is generated based on an occlusion handling mechanism, wherein the occlusion handling mechanism comprises determining at least one occluder in the video segment based on identifying a scene background for the video segment, a scene foreground for the video segment and at least one moving object in the video segment.

This is beneficial, since the advertisement image can be embedded in the input video, seamlessly, and in a non-intrusive way. Moreover, it ensures handling occlusions that occur between the advertisement image and the other objects in the video. For example, if the detected surface (i.e. which the advertisement will be embedded on) is occluded by another object, such as when this object moves to the front of the detected surface, the occlusion handling mechanism ensures that the object is always shown in front of the advertisement image, as if the advertisement image was already there physically, when the video was recorded. The occluder and the area of occlusion are determined by foreground/background segmentation. Therefore, if there is no occlusion, the advertisement can be embedded in the video without the need for the occlusion handling mechanism.

In an implementation from the first aspect, segmenting multimedia data of the input digital video further comprises semantic analysis of visual information.

This is beneficial, since the best advertisement can be selected for a video segment from the database based on the semantic similarity.

In an implementation from the first aspect, segmenting multimedia data of the input digital video further comprises at least one of a video segment class detection, a video segment object detection, a video segment object recognition, a video segment image captioning, a video segment salient region detection, a video segment face detection, a video segment text detection, and a video segment motion detection.

This is beneficial, since each video segment is analyzed by multiple submodules in different ways. The video segment class detection ensures detecting a video segment class, which is used to select semantically similar advertisement images. The video segment object detection and the video segment object recognition enable detection of objects' locations in the video segments and further recognizes the objects. Moreover, they ensure understanding video segment's composition, and semantically selecting similar advertisement images. The video segment image captioning ensures generating a natural language description of an image in the video segment. The video segment salient region detection ensures reducing disruptiveness and improving user's viewing experience. This module aims to find the least salient region and embed the advertisement image into this region. So, advertisement image does not block any meaningful area in a frame, and thus, a user's viewing quality is improved. The video segment face detection and the video segment text detection enable searching and finding faces and texts from each frame of the video segment, and they further provide feedback for not embedding the advertisement image into detected regions. The video segment motion detection is beneficial for occlusion handling. For example, if an object occludes the embedded advertisement image, the device determines this situation by estimating motion activities and preventing defects. The output video may have a scene natural such as the advertisement image was there when the video was recorded, or the like.

In an implementation from the first aspect, analyzing the audial data comprises a speech recognition and a text analysis.

This is beneficial, since audial information processing detects speech in the video segment, then finds the most significant words by using known methods, which enables understanding the video segment's composition, and then more efficiently determines a video content information for the video segment.

In an implementation from the first aspect, the detection of the surface is performed based on a division of the frames of the video segment to a plurality of grids and scoring each grid by at least one of a saliency detection algorithm, an objection recognition algorithm, a face detection algorithm, a text detection algorithm, and an edge detection algorithm.

This is beneficial, since the least disturbing or least intrusive area may be determined. For example, each image of a video segment may be divided into a plurality of grids, and each grid may be scored by using these algorithms. The scores of the grids may be used and the candidate locations (i.e. corresponding to the detected surface) may be determined and the advertisement image is embedded to the locations having highest scores. Moreover, by applying one or more of the above mentioned algorithms, the most suitable candidate area (i.e. corresponding to the detected surface) is determined for embedding the advertisement image. These algorithms are the saliency detection algorithm, the objection recognition algorithm, the face detection algorithm, the text detection algorithm, and the edge detection algorithm.

In an implementation from the first aspect, the saliency detection algorithm comprises detecting a least salient region, and further detecting a surface in the detected least salient region.

This is beneficial, since detecting the least salient region, and further detecting the surface in the detected least salient region, allows embedding the advertisement image to the smoothest parts in a video segment of a video stream, and it further reduces the intrusiveness.

In an implementation from the first aspect, the determination unit is further configured to determine a 3D shape of the detected surface, and wherein the processing unit is further configured to generate the output video, based on the determined 3D shape of the detected surface and the occlusion handling mechanism.

This is beneficial, since it ensures that the multimedia advertisements (i.e. the at least one advertisement image, particularly one or more advertisement still images and/or an advertisement video) are embedded into videos by considering the 3D pose of the surface that the advertisement image will be embedded on, and by handling occlusions.

In an implementation from the first aspect, the determination unit is further configured to detect a moving object in a video segment, and wherein the processing unit is further configured to generate the output video by embedding the selected advertisement image such that the selected advertisement image is embedded behind the detected moving object and in front of the detected surface.

This is beneficial, since it ensures detection of moving objects in a video segment and/or detection of the movements of the camera that recorded the video. Moreover, it further enables embedding the advertisement image in the detected surface, and keeping it on this location by an occlusion handling mechanism, even if the objects in the video move and/or if the camera moves, etc.

In an implementation from the first aspect, the determination unit is further configured to detect the at least one surface in the video segment in a determined time interval, and the processing unit is further configured to embed the selected advertisement image from the database on the detected surface in the output video in the determined time interval.

This is beneficial, since it enables an automatic process for embedding the advertisement images into the video segments. Moreover, the advertisement images may be embedded at a certain time or a time period, and/or during whole video segment. Additionally, it ensures that the advertisement image will be properly embedded during the time interval of the video segment.

In an implementation from the first aspect, the determination unit is further configured to track a movement of the detected surface, and the processing unit is further configured to embed the selected advertisement image from the database on the detected surface such that the selected advertisement image being maintained on the detected surface in the output video.

This is beneficial, since the detected surface is tracked. Moreover, it ensures that the advertisement image is maintained on the detected surface, even if the objects in the video segments move and/or if the camera that recorded the video moves, or the like.

The device of the first aspect in summary provides a novel approach for embedding the most relevant advertisement images through analyzing the video segments and their audio content, and selecting the best location and time frame for the advertisement images in the video segment by considering the video content information.

A second aspect of the present invention provides a method for processing a digital video, wherein the method comprises the steps of, segmenting multimedia data of an input digital video to audial data and a plurality of video segments, and determining a video content information for each video segment by analyzing the audial data and frames of the video segment; detecting at least one surface in a video segment, and selecting an advertisement image from a database for the detected surface, based on a semantic similarity between meta-data of the advertisement image and the determined video content information of the corresponding video segment; and generating an output video, by embedding the selected advertisement image from the database on the detected surface.

In an implementation from the second aspect, the method further comprises generating the output video based on an occlusion handling mechanism, wherein the occlusion handling mechanism comprises determining at least one occluder in the video segment based on identifying a scene background for the video segment, a scene foreground for the video segment and at least one moving object in the video segment.

In an implementation from the second aspect, segmenting multimedia data of the input digital video further comprises a semantic analysis of visual information.

In an implementation from the second aspect, segmenting multimedia data of the input digital video further comprises at least one of a video segment class detection, a video segment object detection, a video segment object recognition, a video segment image captioning, a video segment salient region detection, a video segment face detection, a video segment text detection, and a video segment motion detection.

In an implementation from the second aspect, analyzing the audial data comprises a speech recognition and a text analysis.

In an implementation from the second aspect, the method further comprises performing detection of the surface based on a division of the frames of the video segment to a plurality of grids and scoring each grid by at least one of a saliency detection algorithm, an objection recognition algorithm, a face detection algorithm, a text detection algorithm, and an edge detection algorithm.

In an implementation from the second aspect, the saliency detection algorithm comprises detecting a least salient region, and further detecting a surface in the detected least salient region.

In an implementation from the second aspect, the method further comprises determining a 3D shape of the detected surface, and wherein the processing unit is further configured to generate the output video, based on the determined 3D shape of the detected surface and the occlusion handling mechanism.

In an implementation from the second aspect, the method further comprises detecting a moving object in a video segment, and wherein the processing unit is further configured to generate the output video by embedding the selected advertisement image such that the selected advertisement image is embedded behind the detected moving object and in front of the detected surface.

In an implementation from the second aspect, the method further comprises detecting the at least one surface in the video segment in a determined time interval, and embedding the selected advertisement image from the database on the detected surface in the output video in the determined time interval.

In an implementation from the second aspect, the method further comprises tracking a movement of the detected surface, and embedding the selected advertisement image from the database on the detected surface such that the selected advertisement image being maintained on the detected surface in the output video.

A third aspect of the present invention provides a computer program comprising program code causing a computer to perform the method according to the second aspect of the present invention, when being carried out on a computer.

A fourth aspect of the present invention provides a non-transitory computer-readable recording medium that stores therein a computer program product which, when executed by a processor, causes the method according to the second aspect of the present invention to be performed.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: shows a schematic view of a device for processing a digital video according to an embodiment of the present invention.
- FIG. 2: shows a schematic view of the device for processing a digital video according to an embodiment of the present invention in more detail.
- FIG. 3: shows a schematic view of a video analyzing unit.
- FIG. 4: shows a schematic view of an embodiment of a system including the device according to an embodiment of the present invention.
- FIG. 5: shows a schematic view of a method for processing a digital video according to an embodiment of the present invention.
- FIG. 6: shows a schematic view of a method for segmenting an input digital video, selecting an advertisement image for the video segment and embedding the selected advertisement image into the video segment according to an embodiment of the present invention.

### DETAILED DESCRIPTION OF EMBODIMENTS

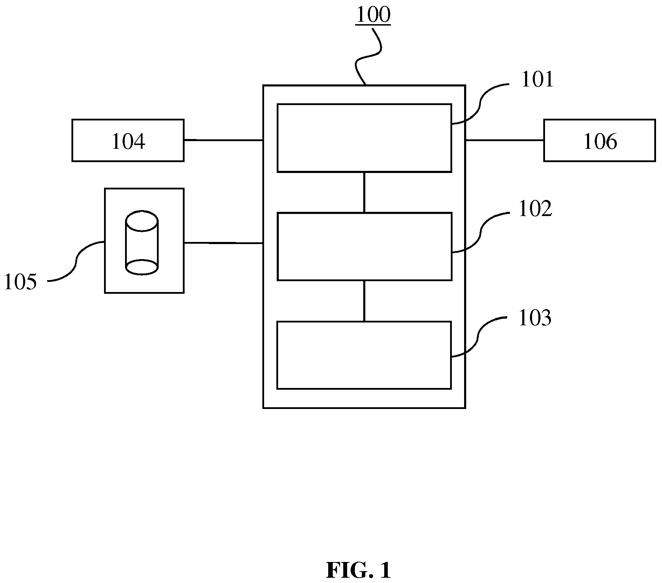

FIG. 1 shows a schematic view of a device 100 according to an embodiment of the present invention. The device 100 is configured to process a digital video. The device 100 comprises a video analyzing unit 101, a determination unit 102 and a processing unit 103.

The device 100 may be an electronic device, e.g. a personal computer, a tablet computer or the like, it may be a server device/computer, a smartphone, it may be located in one device, it may be distributed between two or more devices, it may be a remote computer (cloud), etc., without limiting the present disclosure in that regards.

The video analyzing unit 101 is configured to segment multimedia data of an input digital video 104 to audial data and a plurality of video segments, and determine a video content information for each video segment by analyzing the audial data and frames of the video segment.

In other words, the video analyzing unit 101 is configured to perform a multimodal content-based video analysis. For example, the video analyzing unit 101 may segment the multimedia data of the input digital video to audial data and the plurality of video segments.

The video analyzing unit 101 may be further configured to analyze the audial data by a speech recognition, for example, the speech content in the video may be converted to text based on a speech-to-text program, and the extracted text is analyzed using natural language processing methods, in order to determine a video content information for each video segment. The extracted text will then be analyzed using natural language methods such as an entity recognition method, a part of speech tagging, etc.

Furthermore, the video analyzing unit 101 may analyze the frames of the video segment. The frames of the video segment may be analyzed using one or more visual and semantic analysis methods such as video segment object detection, video segment object recognition, video segment image captioning, video segment face and text detection, and video segment motion analysis. These analyses may be performed using state-of-the-art computer vision techniques, which are mostly deep-learning based. Object recognition will provide insight about what is inside the video. Image captioning gives a natural language description of an image. Object, face and text locations are used for detecting important areas, which are not suitable to embed the advertisement image. Motion analysis is used for detecting empty and static areas, moving objects, or camera movements. These will be used for detecting the surface for embedding the advertisement image, embedding it there properly, and keeping it on this location (i.e. the detected surface) even if the objects or camera move while handling occlusions.

Therefore, the video analyzing unit 101 of the device 100 is able to segment multimedia data of an input digital video to audial data and a plurality of video segments, analyze the audial data and frames of the video segment, and determine a video content information for each video segment.

The device 100 further includes the determination unit 102, which is configured to detect at least one surface in a video segment, and select an advertisement image from a database for the detected surface, based on a semantic similarity between meta-data of the advertisement image and the determined video content information of the corresponding video segment.

The determination unit 102 detects the surface for placing the advertisement, which may be, for example, an empty area in the video segment. The determination unit 102 may use the extracted video content information and may detect the surface in the best time frame and spatial location. For example, a surface may be detected for showing the advertisements to viewers without disturbing the viewers for a reasonable amount of time.

Moreover, the determination unit 102 is configured to select the advertisement image from the database 105 for the detected surface. The advertisement image is particularly selected from the database 105 using the semantic similarity of the advertisement and the video content information. The database 105 includes advertisement's metadata that, for example, is provided by the advertiser. A search may be performed in the database 105 using the determined video content information, which is determined by the video analyzing unit 101. Advertisement selection may be based on criteria including the semantic distance, advertisement size (and length if the advertisement is a video), etc.

The device 100 further includes the processing unit 103, which is configured to generate an output video 106, by embedding the selected advertisement image from the database 105 on the detected surface.

In other words, the processing unit 103 may embed the selected advertisement from the database 105 on the detected surface by using one and/or more image and video processing techniques. Moreover, if the objects in the video segment move and/or if the camera moves, the processing unit 103 may further use an algorithm for keeping the advertisement image in corresponding area, e.g., the detected surface in the output video 106. For example, the processing unit 103 may generate the output video 106 by occlusion handling mechanism, in which if an object comes in front of the area that the advertisement image is embedded, the embedded advertisement image should stay behind that object.

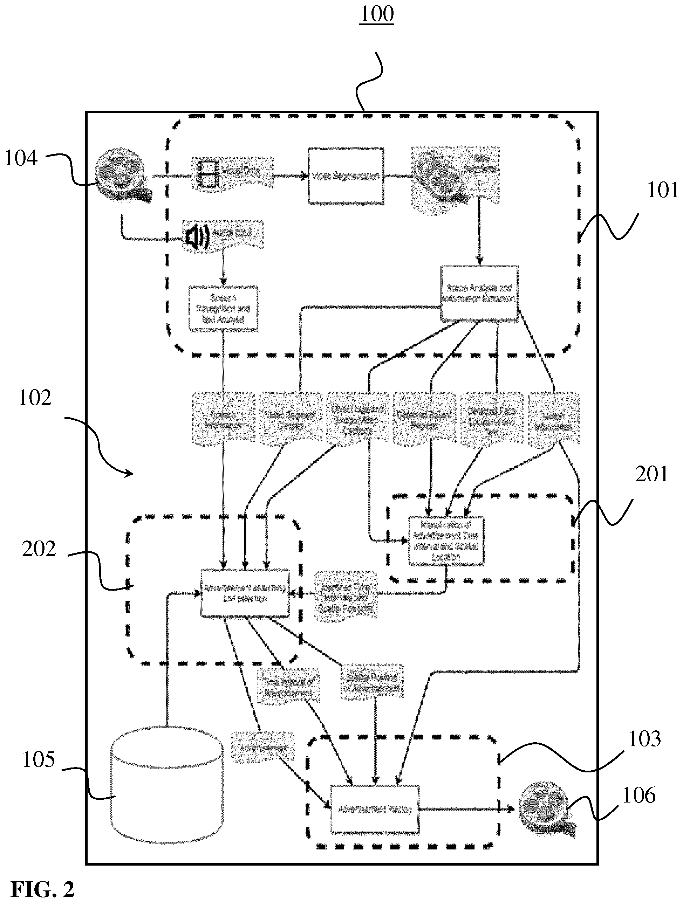

FIG. 2 shows a schematic view of a device 100 according to an embodiment of the present invention in more detail. The device 100 of Fig. 2 is based on the device 100 of Fig. 1 and therefore includes all of its functions and features. To this end, identical features are labeled with identical reference signs. All features that are now going to be described in view of Fig. 2 are optional features of device of 100.

As it is shown in Fig. 2, the determination unit 102 of the device 100 optionally further can comprise an advertisement time interval and spatial location identification unit 201 and an advertisement search and selection unit 202.

As it is indicated in Fig. 2, the device 100 obtains the multimedia data of the input digital video 104, and the video analyzing unit 101 of the device 100 segments the multimedia data of the input digital video 104 to audial data and visual data, which includes the plurality of the video segments. The video analyzing unit 101 further analysis the audial data based on, for instance, a speech recognition and text analysis method, and determines speech information for the input digital video, and provides the speech information to the advertisement search and selection unit 202 in the determination unit 102.

Moreover, the video analyzing unit 101 can analyze the frames of the video segment based on a scene analysis method, and can extract the information including video segment classes, object tags and image/video captions. The video analyzing unit 101 further detects salient regions, face and texts in the frames of the video segment, and extracts motion information. Furthermore, the video analyzing unit 101 provides the extracted information to the determination unit 102.

The determination unit 102 optionally includes the advertisement time and spatial location identification unit 201, which obtains the extracted information and identifies the time intervals and spatial positions for embedding the advertisement image. Moreover, the determination unit 102 optionally includes the advertisement search and selection unit 202, which is configured to search the advertisement images from the database 105 and selects an advertisement image. The advertisement searching and selection unit 202 of the determination unit 102 provides the selected advertisement, the identified time interval for the selected advertisement image, and the identified spatial position of the advertisement image to the processing unit 103.

The processing unit 103 of the device 100 embeds the selected advertisement on the identified spatial position at the identified time intervals, and further generates the output video 106.

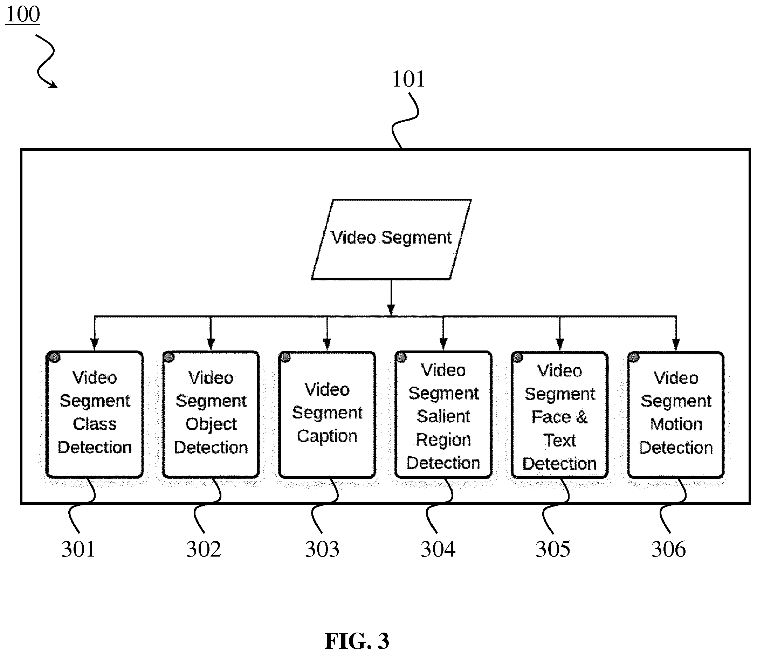

FIG. 3 shows a schematic view of a video analyzing unit 101, as included in the device 100 shown in FIG. 1 or FIG.2 The video analyzing unit 101 may analyze the frames of the video segment by six units including a video segment class detection and recognition unit 301, a video segment object detection and object recognition unit 302, a video segment caption unit 303, a video segment salient region detection unit 304, a video segment face and text detection unit 305, and a video segment motion detection unit 306. The video analyzing unit 101 may be configured to analyze the frames of video segment by one or more of the units, which are responsible for analyzing the video segment in a different way.

The video segment class detection unit 301 may be configured to detect video segment class e.g. football, cartoon, concert etc. This video segment class information may then be used to select semantically similar advertisements.

The video segment object detection and recognition unit 302 may be configured to identify at least one object in each frame e.g., magpie, maillot, mosque etc. These detected objects help to understand video segment's composition and select a semantically similar advertisement image.

The video segment caption unit 303 may be configured to create a sentence, for example, a text in English to express video segment's composition. This caption includes information which helps determining the video segment's composition and/or the video content information.

The video segment salient region detection unit 304 may be configured to reduce disruptiveness and improve user's viewing experience. This unit aims to find the least salient region and embed the advertisement image into this region. So, the embedded advertisement image does not block any meaningful information in a frame, and thus, the user's viewing quality is improved.

The video segment face and text detection unit 305 may be configured to search and find face(s) and text(s) from each frame of the video segment and provides feedback for not embedding the advertisement image on the determined regions (i.e. including the faces and texts in the video segment). The video segment face and text detection unit 305 may provide a similar aim as video segment salient region detection module 304.

The video segment motion detection unit 306 may be responsible for implementing an occlusion handling mechanism. For example, if any kind of object occludes the embedded advertisement, the video segment motion detection unit 306 identifies this situation with estimated motion activities. Therefore, the video segment motion detection unit 306 may prevent defects, and may further create more natural scenes.

Besides the visual information extraction, the video analyzer unit may have also an audial information extraction (not shown), as discussed above. The video analyzer unit 101 analyzes the audial data and detects speech in the video segment, then find mostly significant words from using known methods to determine the video content information, as discussed above.

In summary of the above, this invention proposes a novel approach that aims not only to retrieve the most relevant advertisement image through analyzing the frames of the video segment and its audial data, but also to embed the advertisement image into the optimum location and time interval. The device may also perform saliency detection and occlusion handling mechanism, which allows embedding the advertisement images to the smoothest parts in a video segment while minimizing the intrusiveness.

Moreover, the device provides a content based automatic advertisement embedding by saliency detection, and further uses an extensive location analysis e.g., the occlusion handling mechanism, which are advantageous over the prior art systems.

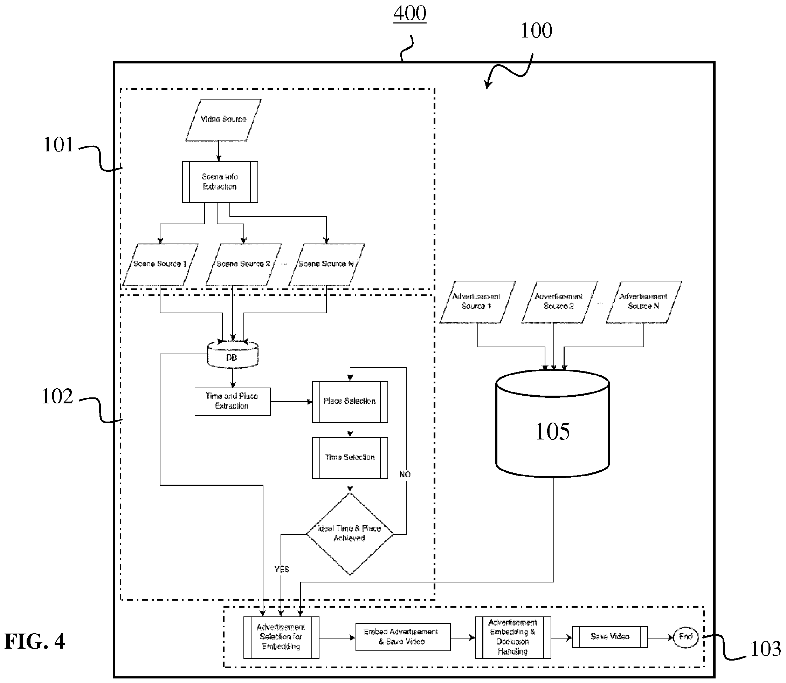

FIG. 4 shows a schematic view of an embodiment of a system 400 including a device 100 according to an embodiment of the present invention.

The device 100 of Fig. 4 is based on the device 100 of Fig. 1 or FIG. 2 and therefore includes all of its functions and features.

The device 100 of the system 400 generates an output video by embedding an advertisement image into multimedia data of a video source being an input digital video by considering the 3D pose of the surface that the advertisement image will be placed on, and an occlusion handling mechanism. The video segments are semantically analyzed and advertisement images are chosen based on the semantic similarity between the video content information and the advertisement meta-data.

The device 100 comprises a video analyzing unit 101 which segments multimedia data of a video source being an input digital video to audial data and video segments, analyzes the audial data and the frames of the video segment, extracts scene information, and determines a video content information.

The video analyzing unit 101 analyzes the audial data of the video source based on a speech recognition and text analysis, and it further segments the video source (i.e. the input digital video) and classifies the video segments.

Moreover, the video analyzing unit 101 extracts the information in the video segments. The extracted information include objects information which are extracted by video segment objection detection unit, saliency information which are extracted by video segment salient region detection unit, face and text information which are extracted by video segment face and text detection unit and motion information which are extracted by the video segment motion detection unit.

The video analyzing unit 101 performs the analysis of the audial data and the frames of the video segments for all of the video segments and/or the scene in the video source and determines a video content information.

Furthermore, the video analyzing unit 101 provides the extracted information to a database (DB) in the determination unit 102. The determination unit 102 optionally includes an advertisement selection unit which is configured to use the determined video content information and the advertisement image metadata to select most relevant advertisement for the video segment and/or the selected scene. The determination unit 102 further optionally includes a time and location identification unit which is configured to determine a time and a location (i.e. detect a surface) for embedding the advertisement image by using object, saliency, face, text and motion information. The determination unit 102 uses aforementioned information for finding the least disturbing place for the viewer.

The system 400 further includes a database 105, which stores the advertisement images and their corresponding meta-data, the advertisement images may be categorized, for example, based on their content, the source of advertisements, or the like, without limiting the present disclosure in that regards.

The device 100 further comprises the processing unit 103, which generates the output video. The processing unit 103 embeds the advertisement image, performs an occlusion handling, saves the multimedia data of the processed video, and further generates the output video. For example, the processing unit 103 uses the location (i.e. detected surface) and time information (i.e. the time interval that the advertisement will be shown), motion information, occlusion information, and advertisement image will be embedded.

Hence the device 100 is able to embed the advertisement image and/or the advertisement video into the input digital video. First the input digital video is segmented into the video segments and/or video scenes. Each video segment and/or scene is analyzed, and the best available location and time frame are chosen. Using the extracted semantic information from the video segments and/or scenes, a suitable advertisement image is selected from the database and is embedded into the selected location and time frame while handling occlusions. The output of the system is the output video with the embedded advertisement on the detected surface.

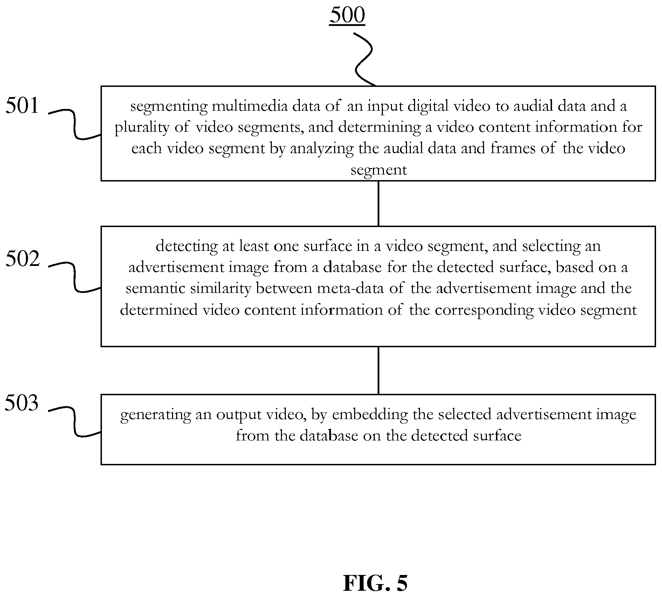

FIG. 5 shows a schematic view of a method 500 for processing a digital video according to an embodiment of the present invention.

The method 500 comprises a first step of, segmenting 501 multimedia data of an input digital video to audial data and a plurality of video segments, and determining, e.g. extracting, 501 a video content information for each video segment by analyzing the audial data and frames of the video segment.

The method further comprises a second step of, detecting 502 at least one surface in a video segment, and selecting 502 an advertisement image from a database for the detected surface, based on a semantic similarity between meta-data of the advertisement image and the determined, e.g. extracted, video content information of the corresponding video segment.

The method further comprises a third step of, generating 503 an output video, by embedding the selected advertisement image from the database on the detected surface.

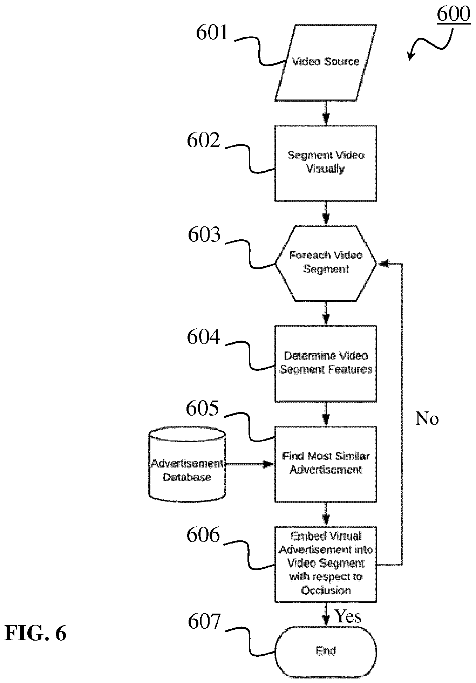

FIG. 6 shows a schematic view of a method 600 for processing a digital video according to an embodiment of the present invention.

At 601, the device 100 obtains a video source as an input digital video.

At 602, the device 100 segments the video visually into a plurality of video segments. The video analyzing unit 101 segments it using its visual information. Visual information denotes structural information of each frame, color histogram, edge information, etc. The video segmentation operation may reduce the number of computational operations for selecting an advertisement image for the video segment, or the like.

At 603, the video analyzing unit in the device 100 analyzes the frames of the video segment.

At 604, the video analyzing unit 101 determines the video segment features and further determines a video content information for the video segment.

At 605, the determination unit 102 selects an advertisement image from an advertisement database based on a semantic similarity between meta-data of the advertisement image and the determined video content information of the corresponding video segment.

At 606, the processing unit 103 of the device 100 embeds the selected advertisement image on the detected surface of the video segment and performs an occlusion handling mechanism.

Moreover, when it is determined that the occlusion handling mechanism and the embedding of the advertisement image is performed, the processing unit goes to step 607 and generates the output video. However, when it is determined that the advertisement image is not embedded and the occlusion handling mechanism is not performed, the method goes to step 603 and the video analyzing unit 101 analyzes the video segment again and determines, e.g. extracts, the video content information.

In addition to the video content information and visual similarity, the device may consider the semantic similarity between the video segment and the advertisement image, for example, several information may be extracted for each frame in the video segment in different ways and the determination unit may consider the extracted information for selecting the advertisement image.

The device may automatically embed the multimedia advertisements (e.g., advertisement images, advertisement videos, etc.) into input digital videos. For example, the device aims to embed virtual advertisements into semantically similar video segments based on the occlusion handling mechanism, and the salient region analysis. The semantic similarity denotes relation between the video segment and the advertisement image, for example, for any video segment related to vehicles, the device may not embed an advertisement of cleaning materials. Moreover, the occlusion handling mechanism may be applied such that if any object moves to the front of the embedded advertisement image, the embedded advertisement image should stay behind the object and in front of the detected surface.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A device (100) for processing a digital video, wherein the device comprises:
- a video analyzing unit (101) configured to segment multimedia data of an input digital video (104) to audial data and a plurality of video segments, and determine a video content information for each video segment by analyzing the audial data and frames of the video segment;
- a determination unit (102) configured to detect at least one surface in a video segment, and select an advertisement image from a database (105) for the detected surface, based on a semantic similarity between meta-data of the advertisement image and the determined video content information of the corresponding video segment; and
- a processing unit (103) configured to generate an output video (106), by embedding the selected advertisement image from the database (105) on the detected surface.

2. The device (100) according to claim 1, wherein the output video (106) is generated based on determining at least one occluder object in the video segment by an occlusion handling mechanism, wherein the occlusion handling mechanism comprises identifying a scene background for the video segment, a scene foreground for the video segment and at least one moving object in the video segment.

3. The device (100) according to any one of the preceding claims, wherein segmenting multimedia data of the input digital video (104) further comprises a semantic analysis of visual information.

4. The device (100) according to any one of the preceding claims, wherein segmenting multimedia data of the input digital video (104) further comprises at least one of a video segment class detection, a video segment object detection, a video segment object recognition, a video segment image captioning, a video segment salient region detection, a video segment face detection, a video segment text detection, and a video segment motion detection.

5. The device (100) according to any one of the preceding claims, wherein analyzing the audial data comprises a speech recognition and a text analysis.

6. The device (100) according to any one of the preceding claims, wherein the detection of the surface is performed based on a division of the frames of the video segment to a plurality of grids and scoring each grid by at least one of a saliency detection algorithm, an objection recognition algorithm, a face detection algorithm, a text detection algorithm, and an edge detection algorithm.

7. The device (100) according to claim 6, wherein the saliency detection algorithm comprises detecting a least salient region, and further detecting a surface in the detected least salient region.

8. The device (100) according to claim 2, wherein the determination unit (102) is further configured to determine a 3D shape of the detected surface, and wherein the processing unit (103) is further configured to generate the output video (106), based on the determined 3D shape of the detected surface and the occlusion handling mechanism.

9. The device (100) according to any one of the preceding claims, wherein the determination unit (102) is further configured to detect a moving object in a video segment, and wherein the processing unit (103) is further configured to generate the output video (106) by embedding the selected advertisement image such that the selected advertisement image is embedded behind the detected moving object and in front of the detected surface.

10. The device (100) according to any one of the preceding claims, wherein
the determination unit (102) is further configured to detect the at least one surface in the video segment in a determined time interval, and
the processing unit (103) is further configured to embed the selected advertisement image from the database on the detected surface in the output video (106) in the determined time interval.

11. The device (100) according to any one of the preceding claims, wherein
the determination unit (102) is further configured to track a movement of the detected surface, and
the processing unit (103) is further configured to embed the selected advertisement image from the database on the detected surface such that the selected advertisement image is maintained on the detected surface in the output video (106).

12. A method (500) for processing a digital video, wherein the method comprises the steps of:
- segmenting (501) multimedia data of an input digital video (104) to audial data and a plurality of video segments, and determining (501) a video content information for each video segment by analyzing the audial data and frames of the video segment;
- detecting (502) at least one surface in a video segment, and selecting (502) an advertisement image from a database (105) for the detected surface, based on a semantic similarity between meta-data of the advertisement image and the determined video content information of the corresponding video segment; and
- generating (503) an output video (106), by embedding the selected advertisement image from the database (105) on the detected surface.

13. The method (500) according to claim 12, wherein the method further comprises detecting (502) a least salient region, and further detecting (502) a surface in the detected least salient region.

14. The method (500) according to claim 12, wherein the method further comprises determining (502) a 3D shape of the detected surface, and generating (503) the output video (106), based on the determined 3D shape of the detected surface and the occlusion handling mechanism.

15. The method (500) according to claim 12, wherein the method further comprises detecting (502) a moving object in a video segment, and generating (503) the output video (106) by embedding the selected advertisement image such that the selected advertisement image is embedded behind the detected moving object and in front of the detected surface.

16. A computer program comprising program code causing a computer to perform the method (500) according to one of the claims 12 to 15, when being carried out on a computer.

17. A non-transitory computer-readable recording medium that stores therein a computer program product which, when executed by a processor, causes the method (500) according to one of the claims 12 to 15 to be performed.

## Amended claims

### Amended claims in accordance with Rule 137(2) EPC.

1. A device (100) for processing a digital video, wherein the device comprises:
- a video analyzing unit (101) configured to segment multimedia data of an input digital video (104) to audial data and a plurality of video segments, and determine a video content information for each video segment by analyzing the audial data and frames of the video segment;
- a determination unit (102) configured to detect at least one surface in a video segment, and select an advertisement image from a database (105) for the detected surface, based on a semantic similarity between meta-data of the advertisement image and the determined video content information of the corresponding video segment, wherein the detection of the surface is performed based on a division of the frames of the video segment to a plurality of grids and scoring each grid by a saliency detection algorithm, wherein the saliency detection algorithm comprises detecting a least salient region, and further detecting a surface in the detected least salient region; and
- a processing unit (103) configured to generate an output video (106), by embedding the selected advertisement image from the database (105) on the detected surface.

2. The device (100) according to claim 1, wherein the output video (106) is generated based on determining at least one occluder object in the video segment by an occlusion handling mechanism, wherein the occlusion handling mechanism comprises identifying a scene background for the video segment, a scene foreground for the video segment and at least one moving object in the video segment.

3. The device (100) according to any one of the preceding claims, wherein segmenting multimedia data of the input digital video (104) further comprises a semantic analysis of visual information.

4. The device (100) according to any one of the preceding claims, wherein segmenting multimedia data of the input digital video (104) further comprises at least one of a video segment class detection, a video segment object detection, a video segment object recognition, a video segment image captioning, a video segment salient region detection, a video segment face detection, a video segment text detection, and a video segment motion detection.

5. The device (100) according to any one of the preceding claims, wherein analyzing the audial data comprises a speech recognition and a text analysis.

6. The device (100) according to any one of the preceding claims, further configured to score each grid by at least one of, an objection recognition algorithm, a face detection algorithm, a text detection algorithm, and an edge detection algorithm.

7. The device (100) according to claim 2, wherein the determination unit (102) is further configured to determine a 3D shape of the detected surface, and wherein the processing unit (103) is further configured to generate the output video (106), based on the determined 3D shape of the detected surface and the occlusion handling mechanism.

8. The device (100) according to any one of the preceding claims, wherein the determination unit (102) is further configured to detect a moving object in a video segment, and wherein the processing unit (103) is further configured to generate the output video (106) by embedding the selected advertisement image such that the selected advertisement image is embedded behind the detected moving object and in front of the detected surface.

9. The device (100) according to any one of the preceding claims, wherein
the determination unit (102) is further configured to detect the at least one surface in the video segment in a determined time interval, and
the processing unit (103) is further configured to embed the selected advertisement image from the database on the detected surface in the output video (106) in the determined time interval.

10. The device (100) according to any one of the preceding claims, wherein
the determination unit (102) is further configured to track a movement of the detected surface, and
the processing unit (103) is further configured to embed the selected advertisement image from the database on the detected surface such that the selected advertisement image is maintained on the detected surface in the output video (106).

11. A method (500) for processing a digital video, wherein the method comprises the steps of:
- segmenting (501) multimedia data of an input digital video (104) to audial data and a plurality of video segments, and determining (501) a video content information for each video segment by analyzing the audial data and frames of the video segment;
- detecting (502) at least one surface in a video segment, and selecting (502) an advertisement image from a database (105) for the detected surface, based on a semantic similarity between meta-data of the advertisement image and the determined video content information of the corresponding video segment, wherein the detection of the surface is performed based on a division of the frames of the video segment to a plurality of grids and scoring each grid by a saliency detection algorithm, wherein the saliency detection algorithm comprises detecting a least salient region, and further detecting a surface in the detected least salient region; and
- generating (503) an output video (106), by embedding the selected advertisement image from the database (105) on the detected surface.

12. The method (500) according to claim 11, wherein the method further comprises detecting (502) a least salient region, and further detecting (502) a surface in the detected least salient region.

13. The method (500) according to claim 11, wherein the method further comprises determining (502) a 3D shape of the detected surface, and generating (503) the output video (106), based on the determined 3D shape of the detected surface and the occlusion handling mechanism.

14. The method (500) according to claim 11, wherein the method further comprises detecting (502) a moving object in a video segment, and generating (503) the output video (106) by embedding the selected advertisement image such that the selected advertisement image is embedded behind the detected moving object and in front of the detected surface.

15. A computer program comprising program code causing a computer to perform the method (500) according to one of the claims 11 to 14, when being carried out on a computer.

16. A non-transitory computer-readable recording medium that stores therein a computer program product which, when executed by a processor, causes the method (500) according to one of the claims 11 to 14 to be performed.
